# DEMANDE DE BREVET EUROPEEN

(11) **EP 1 416 617 A1**
(43) Date de publication de la demande: **06.05.2004**
(21) Numéro de dépôt: 03292701.4
(22) Date de dépôt: 29.10.2003
(51) Int. Cl.: H02K 21/04

(54) **Rotor pour machine électrique tournante à double excitation et machine électrique correspondante**

(30) Priorité: 29.10.2002 FR 0213551
(71) Demandeur: Peugeot Citroen Automobiles SA, 78943 Vélizy-Villacoublay Cedex (FR); CENTRE NATIONAL DE LA RECHERCHE SCIENTIFIQUE (CNRS), 75016 Paris (FR)
(72) Inventeur: Chabot, Franck, 92130 Issy-Les-Moulineaux (FR); Amara, Yacine, 93390 Clichy-Sous-Bois (FR); Lecrivain, Michel, 94200 Ivry-Sur-Seine (FR); Gabsi, Mohamed, 94230 Cachan (FR)
(74) Mandataire: Habasque, Etienne Joel Jean-François

(57) **Abrégé**

Ce rotor pour machine électrique tournante à double excitation comporte :
- des premier et second flasques annulaires (30, 32) en matériau magnétique, disposés coaxialement suivant l'axe du rotor (4), et
- entre lesdits premier et second flasques (30, 32), un ensemble de plots magnétiques successifs répartis à la surface périphérique du rotor (4) et agencés pour définir des premiers plots magnétiques (48, 76, 78) et des seconds plots magnétiques de polarités opposées, les premiers et seconds plots magnétiques étant disposés alternativement suivant la périphérie du rotor (4).

Chaque plot magnétique est formé d'un élément indépendant (44) et le rotor comporte des moyens (46) de fixation desdits éléments (44) autour de l'axe du rotor (4).

## Description

L'invention concerne une machine électrique tournante à double excitation et, plus particulièrement, un rotor pour cette machine comportant :
- des premier et second flasques annulaires en matériau magnétique, disposés coaxialement suivant l'axe du rotor, et
- entre lesdits premier et second flasques, un ensemble de plots magnétiques successifs répartis à la surface périphérique du rotor et agencés pour définir des premiers plots magnétiques et des seconds plots magnétiques de polarités opposées, les premiers et seconds plots étant disposés alternativement suivant la périphérie du rotor.

De telles machines sont notamment décrites dans la demande de brevet FR 2 786 956, déposée le 7 décembre 1998 par le Centre National de la Recherche Scientifique.

Ces machines comprennent un rotor et un stator.

Le stator comporte un noyau magnétique annulaire équipé d'un bobinage statorique, et un bobinage d'excitation. Le noyau annulaire et les bobinages statorique et d'excitation sont disposés dans une couronne magnétique en contact avec la surface extérieure du noyau annulaire. Cette couronne comprend, à chaque extrémité, un rebord d'extrémité radial.

Le rotor comporte deux flasques annulaires en matière magnétique ayant chacun des portions périphériques définissant, avec les rebords d'extrémité latéraux de la couronne magnétique du stator, des entrefers de retour de flux. Le rotor comporte également, disposé entre les deux flasques annulaires, un noyau magnétique cylindrique pourvu de dents radiales, chaque dent formant un premier plot magnétique. Ce noyau pourvu de dents est formé d'une seule et même pièce. Le rotor est aussi équipé de barres de liaison des deux flasques annulaires. Ces barres de liaison sont logées dans les intervalles entre les dents radiales du noyau magnétique et forment des seconds plots magnétiques d'une polarité opposée à celle des premiers plots magnétiques.

Ces machines électriques tournantes à double excitation présentent de bonnes performances. Toutefois, le rotor de ces machines est particulièrement coûteux à réaliser. En effet, le noyau magnétique cylindrique du rotor est fabriqué par découpage d'une tôle feuilletée. Ainsi, même en juxtaposant plusieurs noyaux magnétiques cylindriques à découper sur une même tôle feuilletée, il existe toujours entre ces noyaux des zones importantes de matière qui sont perdues. De plus, la réalisation des dents du noyau magnétique suppose soit l'utilisation d'un outil de découpage coûteux et complexe, soit des opérations supplémentaires telles que des opérations d'usinage.

L'invention vise à remédier à cet inconvénient en proposant un rotor pour une machine électrique tournante à double excitation dont la fabrication est moins coûteuse.

L'invention a donc pour objet un rotor pour machine électrique tournante à double excitation, tel que défini plus haut, caractérisé en ce que chaque plot magnétique est formé d'un élément indépendant et en ce que le rotor comporte des moyens de fixation desdits éléments autour de l'axe du rotor.

Un rotor tel que décrit ci-dessus est moins coûteux à fabriquer. En effet, le noyau magnétique cylindrique, contrairement à ce qui se faisait jusqu'à présent, n'est pas réalisé en une seule pièce, qui doit être découpée ou usinée dans une tôle feuilletée ou toute autre matière magnétique. Au contraire, le noyau magnétique comporte une pluralité d'éléments magnétiques démontables indépendants les uns des autres. Ainsi, le noyau magnétique décrit ci-dessus est réalisé par assemblage de ces éléments à l'aide de moyens de fixation. Ces éléments étant de section plus petite et plus simple, il est possible de réaliser des plans de découpe de ces éléments dans une tôle magnétique de manière à ce que les zones de matière perdue soient nettement inférieures à ce qui était possible lorsque le noyau magnétique n'était formé que d'une pièce. De plus, avec un tel rotor, il n'est plus nécessaire de découper ou d'usiner des dents radiales le long de la périphérie d'un noyau magnétique cylindrique.

Suivant d'autres caractéristiques d'un rotor conforme à l'invention :
- chaque élément formant les premiers plots magnétiques comporte une première extrémité appliquée directement contre le premier flasque annulaire pour établir un circuit magnétique entre le premier flasque annulaire et chacun des premiers plots magnétiques, et chaque élément formant les seconds plots magnétiques comporte une première extrémité tournée vers le premier flasque et séparée du premier flasque annulaire par un espace latéral d'isolation pour inhiber l'établissement d'un circuit magnétique entre ce premier flasque annulaire et chacun des seconds plots magnétiques,
- dans le cadre d'un rotor pour une machine électrique tournante à double excitation homopolaire, chaque élément formant les premiers plots magnétiques comporte une seconde extrémité appliquée directement contre le second flasque annulaire pour établir un circuit magnétique entre le second flasque annulaire et chacun des premiers plots magnétiques, et chaque élément formant les seconds plots magnétiques comporte une seconde extrémité tournée vers le second flasque annulaire et séparée du second flasque annulaire par un espace latéral d'isolation pour inhiber l'établissement d'un circuit magnétique entre ce second flasque annulaire et chacun des seconds plots magnétiques,
- dans le cadre d'un rotor pour une machine électrique tournante à double excitation bipolaire, chaque élément formant les premiers plots magnétiques comporte une seconde extrémité tournée vers le second flasque annulaire et séparée du second flasque annulaire par un espace latéral d'isolation pour inhiber l'établissement d'un circuit magnétique entre ce second flasque annulaire et chacun des premiers plots magnétiques, et chaque élément formant les seconds plots magnétiques comporte une seconde extrémité appliquée directement contre le second flasque annulaire pour établir un circuit magnétique entre le second flasque annulaire et chacun des seconds plots magnétiques,
- l'extrémité de chaque élément indépendant, appliquée directement contre le premier ou le second flasque annulaire, est constituée d'une cale magnétique détachable, tandis que la partie comprise entre la première et la seconde extrémités de chaque élément indépendant est constituée d'une pièce magnétique centrale d'un seul tenant,
- les pièces magnétiques centrales sont réalisées en tôle magnétique feuilletée,
- les pièces magnétiques centrales 48 sont identiques les unes aux autres,
- des aimants sont logés dans les espaces latéraux d'isolation situés entre les extrémités des éléments indépendants et le ou chaque flasque annulaire associé,
- les éléments indépendants sont séparés latéralement les uns des autres par des espaces d'isolation pour inhiber l'établissement de circuits magnétiques entre deux éléments indépendants successifs,
- des aimants sont logés dans les espaces d'isolation séparant latéralement les éléments indépendants,
- il comporte, entre les deux flasques annulaires, une couronne magnétique disposée coaxialement avec l'axe du rotor, les éléments indépendants étant régulièrement répartis autour de la périphérie externe de cette couronne et séparés de celle-ci par un espace axial dans lequel est logé au moins un aimant supplémentaire,
- la section transversale des éléments indépendants formant les plots magnétiques est constante,
- les moyens de fixation comportent des vis amagnétiques, et
- il comporte un nombre pair d'éléments indépendants.

L'invention a également pour objet une machine électrique tournante à double excitation contenant un stator et un rotor, caractérisée en ce que le rotor est conforme à l'invention, et en ce que les premier et second flasques annulaires du rotor comportent chacun une portion définissant avec le stator un entrefer de retour de flux magnétique.

Suivant d'autres caractéristiques d'une machine électrique à double excitation conforme à l'invention :
- pour une machine électrique tournante à double excitation homopolaire, le rotor est conforme au rotor décrit plus haut, dans le cadre d'une machine électrique tournante à double excitation homopolaire,
- pour une machine électrique tournante à double excitation bipolaire, le rotor est conforme au rotor décrit plus haut, dans le cadre d'une machine électrique tournante à double excitation bipolaire,
- le stator comporte :
   - un noyau magnétique annulaire,
   - au moins un bobinage d'excitation,
   - un bobinage statorique bobiné sur le noyau annulaire,
   - au moins une couronne magnétique en contact avec la surface extérieure du noyau annulaire, ladite au moins une couronne magnétique comprenant, à chaque extrémité, un rebord d'extrémité radial définissant, avec les portions des flasques annulaires du rotor l'entrefer de retour de flux.

L'invention sera mieux comprise à la lecture de la description qui va suivre, donnée uniquement à titre d'exemple, et faite en se référant aux dessins, sur lesquels :
- la figure 1 est une vue partielle de face et en coupe d'une machine électrique tournante à double excitation homopolaire comportant un rotor conforme à l'invention ;
- la figure 2 est une vue en coupe suivant la ligne 2-2 de la figure 1 ;
- la figure 3 est une vue de dessus d'une portion de la périphérie extérieure du rotor de la machine de la figure 1 ;
- les figures 4A et 4B sont, respectivement, une vue de dessus de la périphérie extérieure et une vue partielle de face et en coupe d'une variante d'un rotor conforme à l'invention pour une machine électrique tournante à double excitation bipolaire ; et
- la figure 5 est une vue partielle de face et en coupe d'une autre variante du rotor conforme à l'invention.

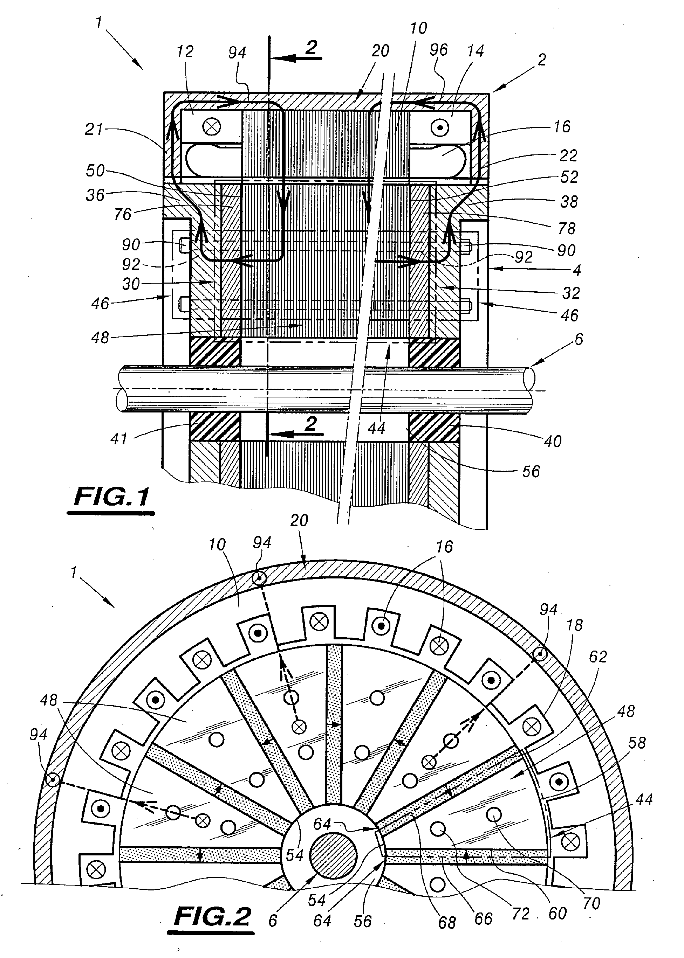

Les figures 1, 2 et 3 représentent une machine 1 électrique tournante à double excitation homopolaire comportant un stator 2 et un rotor 4 monté sur un arbre 6.

Le stator 2 comporte un noyau annulaire 10 en tôle magnétique feuilletée de part et d'autre duquel sont disposés des bobinages d'excitation 12, 14. Les courants circulant dans ces bobinages d'excitation 12, 14 sont de sens opposés.

Un bobinage statorique 16, entouré par les bobinages d'excitation 12, 14, est bobiné sur le noyau annulaire 10 qui présente, à cet effet, une surface intérieure formée de créneaux 18, comme représenté sur la figure 2.

L'ensemble du stator est logé dans une couronne magnétique extérieure 20 qui est en contact avec une surface extérieure du noyau magnétique 10. Cette couronne magnétique 20 comporte des rebords latéraux d'extrémité 21, 22 tournés vers le rotor 4.

Le rotor 4 comporte deux flasques annulaires d'extrémité 30,32 entre lesquels est interposé un ensemble de plots magnétiques. Chaque flasque 30, 32 comporte un rebord axial périphérique 36, 38 dirigé vers l'extérieur et en regard des rebords latéraux 21, 22 respectifs. Ces rebords axiaux périphériques 36, 38 définissent, avec les rebords latéraux d'extrémité 21, 22, des entrefers de retour de flux entre le rotor 4 et le stator 2.

Des bagues 40, 41, en matière amagnétique, par exemple en matière magnétiquement isolante, sont interposées entre l'arbre 6 et les flasques 30, 32 correspondants.

L'ensemble de plots magnétiques comporte des premiers plots magnétiques et des seconds plots magnétiques de polarités opposées répartis successivement et en alternance le long de la périphérie extérieure du rotor 4, en regard du stator 2. Ici, le nombre total de plots magnétiques est pair.

Chaque plot magnétique est formé d'un élément magnétique indépendant 44 apte à conduire des flux magnétiques. Chaque élément magnétique 44 est détachable des flasques annulaires 30, 32, et fixé mécaniquement à ceux-ci à l'aide de moyens de fixation 46. L'élément magnétique 44 est adapté pour être raccordé magnétiquement au flasque 30 et/ou au flasque 32 ou isolé de ceux-ci, de manière à former soit un premier plot magnétique ou soit un second plot magnétique. Ces éléments magnétiques 44 sont également indépendants et séparés les uns des autres de manière à limiter l'établissement de lignes de fuite de champ magnétique entre deux éléments magnétiques successifs de polarités opposées.

Ici, tous les éléments magnétiques formant les premiers plots magnétiques sont identiques entre eux et tous les éléments magnétiques formant les seconds plots magnétiques sont également identiques entre eux.

De plus, pour réduire encore plus le coût de fabrication de ces éléments magnétiques 44, chacun des éléments magnétiques 44 comporte une pièce magnétique centrale 48 d'un seul tenant en matériau magnétique. Cette pièce magnétique centrale est identique, que l'élément magnétique 44 soit adapté pour former un premier ou un second plot magnétique. Ici, la pièce magnétique centrale 48 est en tôle magnétique feuilletée pour limiter la création de courant de Foucault et donc les pertes d'énergie.

Ces pièces magnétiques centrales 48, identiques pour chaque élément magnétique 44, s'étendent entre les deux flasques 30, 32 et sont pourvues de deux extrémités, une première extrémité 50 tournée vers le flasque 30 et une seconde extrémité 52 tournée vers le flasque 32. Cette pièce 48 est un barreau de section constante disposé parallèlement à l'axe du rotor. La section de chaque pièce magnétique 48 est en forme de secteur de couronne et présente deux côtés rectilignes convergents reliés par des côtés incurvés en arc de cercle. Le plus petit côté incurvé 54, représenté sur la figure 2, de chaque pièce magnétique centrale est disposé en vis-à-vis de l'axe 6 du rotor 4 et séparé de cet axe 6 par un jeu central 56 séparant les pièces magnétiques centrales les unes des autres. Ce jeu central 56 est ici par exemple rempli d'air.

Le plus grand côté incurvé 58 de chaque pièce magnétique centrale est placé en regard du noyau magnétique annulaire 10 du stator 2 de manière à former, avec celui-ci, un entrefer. Ce plus grand côté 58 est convexe et sa courbure correspond à celle de la surface intérieure du noyau annulaire 10.

Chaque pièce 48 comporte également deux côtés rectilignes 60, 62 reliant chacun le plus petit côté 54 au plus grand côté 58. Les côtés rectilignes 60, 62 de chaque pièce magnétique centrale sont séparés des côtés rectilignes des pièces magnétiques centrales des plots magnétiques suivant et précédent par un espace d'isolation latéral 64 pour empêcher l'établissement de lignes de fuite de champ magnétique entre deux pièces magnétiques centrales successives. Ici, deux aimants azimutaux 66, 68 de polarités opposées sont disposés en alternance le long de la périphérie du rotor 4 dans les espaces azimutaux 64 ménagés de chaque côté de chaque pièce magnétique centrale 48. Ces aimants azimutaux 66, 68 sont appliqués directement sur chaque côté latéral de chaque pièce magnétique centrale pour, à la fois, isoler magnétiquement les pièces magnétiques centrales les unes des autres et pour renforcer le flux magnétique circulant dans chacune des pièces magnétiques centrales.

Deux trous de fixation 70, 72, traversant de part en part chaque pièce magnétique centrale 48, s'ouvrent à chaque extrémité 50, 52, pour recevoir les moyens de fixation 46.

Dans le cadre d'un rotor pour une machine électrique tournante à double excitation homopolaire, chaque élément magnétique 44 formant un premier plot magnétique comporte, en plus de la pièce magnétique centrale 48, deux cales magnétiques 76, 78 destinées à établir un circuit magnétique entre les flasques annulaires d'extrémité et la pièce magnétique centrale 48. La cale magnétique 76 est formée d'un matériau ferreux et est directement appliquée d'une part contre la première extrémité 50 de la pièce 48, et d'autre part, contre le flasque 30. La seconde cale magnétique 78 est directement appliquée contre la seconde extrémité 52 de la pièce 48 et contre le flasque 32. Les cales magnétiques 76 et 78 sont identiques entre elles et de section transversale identique à celle de la pièce 48. De plus, ces cales magnétiques sont transpercées de deux trous de passage des moyens de fixation 46.

Pour un rotor de machine homopolaire, la pièce magnétique centrale de chaque élément magnétique 44 formant un second plot magnétique est quant à elle isolée magnétiquement des flasques 30, 32. A cet effet, un espace d'isolation latéral est ménagé entre les extrémités 50, 52 de la pièce 48 formant ce second plot magnétique et les flasques 30, 32 correspondants.

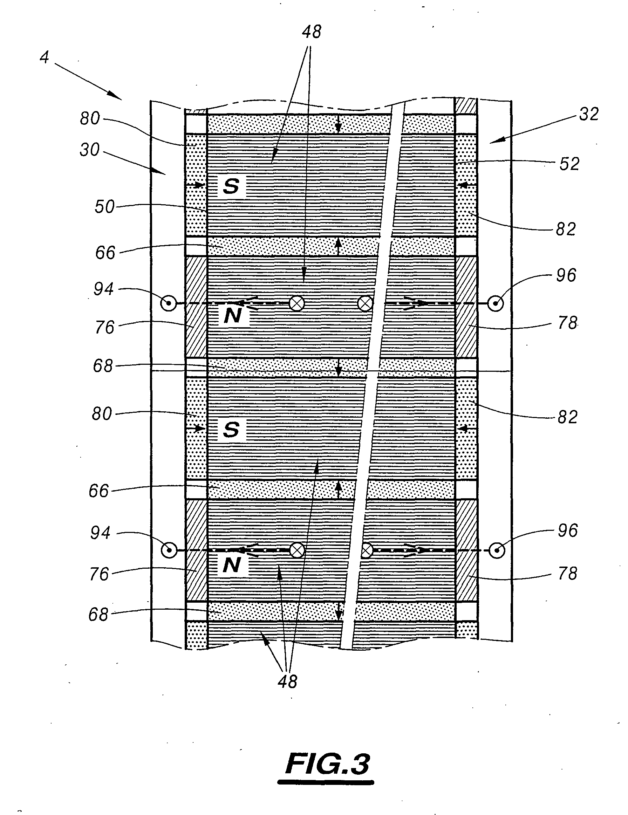

Dans le mode de réalisation décrit ici, des aimants latéraux 80 et 82 (figure 3) de polarités opposées sont respectivement logés dans les espaces d'isolation latéraux situés à chaque extrémité des pièces 48 formant les seconds plots magnétiques. Ces aimants 80, 82 sont destinés, d'une part, à isoler magnétiquement les pièces magnétiques centrales formant les seconds plots magnétiques des flasques 30, 32 et, d'autre part, à renforcer le flux magnétique circulant dans la pièce magnétique centrale. Ces aimants 80, 82 sont de section identique à la pièce 48 formant les seconds plots magnétiques et directement appliqués sur la pièce 48 et sur le flasque annulaire d'extrémité correspondant.

Les cales magnétiques 76, 78 et les aimants latéraux 80, 82 reposent sur la bague amagnétique 40, 41 correspondante.

Les moyens de fixation 46 sont ici démontables. Ils sont par exemple formés de vis 90 en matériau amagnétique pour limiter l'établissement d'un circuit magnétique par l'intermédiaire de celles-ci. Ces vis 90 sont logées dans les trous 70, 72 et traversent de part en part les flasques d'extrémité au travers de passages 92 ainsi que les cales magnétiques ou aimants. Elles sont retenues par des écrous dans les trous de fixation 70, 72.

Lors du fonctionnement de cette machine électrique tournante à double excitation homopolaire, un premier circuit magnétique 94 s'établit par la couronne magnétique 20 du stator, le rebord 21, le flasque annulaire d'extrémité 30 et uniquement les premiers plots magnétiques. Un second circuit magnétique 96, distinct du premier circuit magnétique, s'établit par la couronne magnétique 20, le rebord 22, le flasque annulaire d'extrémité 32 et uniquement les premiers plots magnétiques. En effet, seuls les premiers plots magnétiques sont reliés magnétiquement de part et d'autre aux flasques annulaires d'extrémité 30 et 32.

Le flux magnétique généré par les bobines d'excitation 12, 14 n'emprunte donc pas un trajet passant par les aimants latéraux 80, 82 ou par les aimants azimutaux 66, 68. Ainsi, les risques de démagnétisation de ces aimants sont diminués.

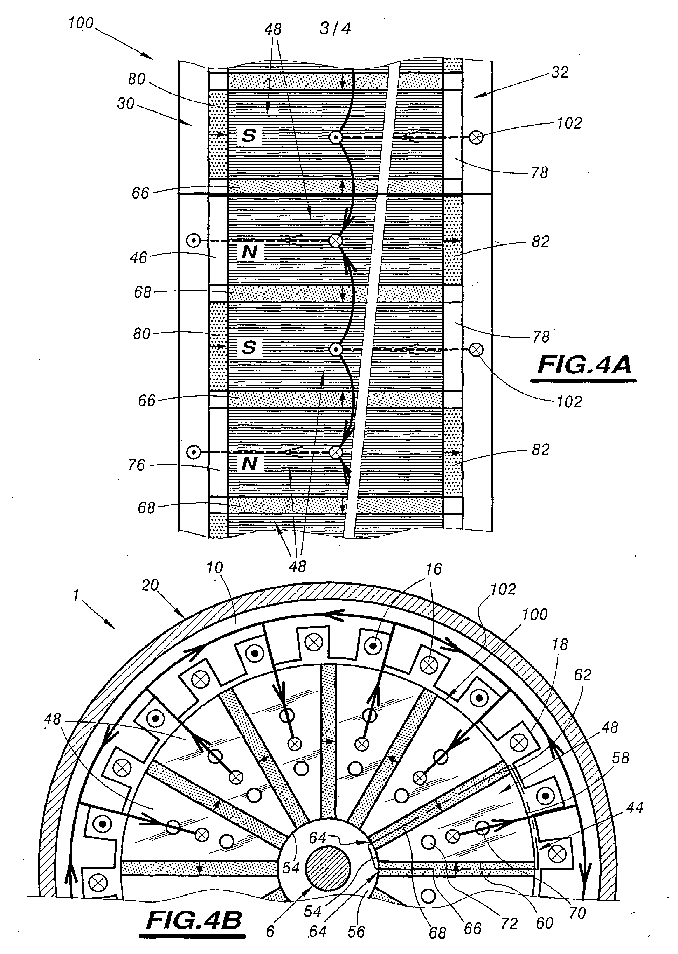

Les figures 4A et 4B représentent un rotor 100 pour une machine électrique tournante à double excitation bipolaire. Le stator d'une telle machine est identique à celui décrit en regard de la figure 1 et ne sera pas décrit ici. En effet, seul le sens de rotation des courants dans les bobinages d'excitation 12, 14 est modifié. Pour une machine bipolaire, le courant circulant dans le bobinage d'excitation 12 est dans le même sens que celui circulant dans le bobinage d'excitation 14.

Les pièces formant le rotor 100 de la machine bipolaire sont identiques à celles décrites en regard des figures 1 à 3 et portent donc les mêmes références. Ici, seule la disposition des cales magnétiques 78 et des aimants latéraux 82 permet de différencier ce rotor 100 du rotor 4. Les cales magnétiques 78 sont disposées uniquement à chaque extrémité de chaque pièce magnétique centrale 48 qui n'est pas raccordée magnétiquement par son autre extrémité au flasque 30. Les aimants latéraux 82 sont facultatifs. Ici, ils sont disposés de manière à renforcer le flux magnétique à chaque extrémité de chaque pièce magnétique centrale 48 raccordée magnétiquement par son autre extrémité 50 au flasque 30. Ici, contrairement à la figure 3, le pôle Nord des aimants 82 est tourné vers le flasque 32. Ainsi, les pièces magnétiques centrales 48 sont raccordées en alternance le long de la périphérie du rotor 100 soit au flasque 30, soit au flasque 32 de manière à former des premiers et des seconds plots magnétiques de polarités opposées.

Lors du fonctionnement du rotor 100, un circuit magnétique 102 s'établit par la couronne magnétique 20, les flasques 30, 32 et les premiers et seconds plots magnétiques. Ce circuit magnétique 102 pénètre dans le flasque 32, se propage dans les plots magnétiques reliés magnétiquement à ce flasque 32 par l'intermédiaire des cales magnétiques 78, ressort par l'intermédiaire du côté 58 pour pénétrer à l'intérieur du noyau annulaire 10. Ensuite, le circuit magnétique 102 passe dans le noyau annulaire 10 et pénètre par le côté 58 des pièces magnétiques centrales 48 reliées magnétiquement au flasque 30 par l'intermédiaire des cales magnétiques 76. Le circuit magnétique 102 se referme ensuite par l'intermédiaire du flasque 30 et du rebord 21 de la couronne magnétique 20.

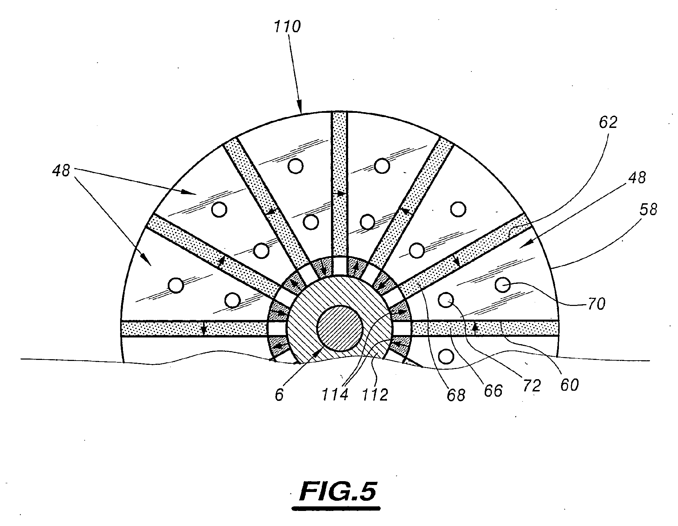

La figure 5 représente un rotor 110. Ce rotor 110 est une variante du rotor 4 ou du rotor 100. Ce rotor 110 est identique au rotor 4 ou au rotor 100, à l'exception du jeu central 56 qui est remplacé par une couronne magnétique 112 montée autour de l'axe 6 et séparée des petits côtés 54 des pièces magnétiques centrales 48 par des aimants supplémentaires 114. Ces aimants supplémentaires 114 sont appliqués directement contre le petit côté 54 de chaque pièce magnétique centrale 44 et contre la couronne magnétique 112 de manière à renforcer le flux magnétique circulant dans chaque pièce 48.

La pièce magnétique centrale 48 a été décrite ici comme étant réalisée en tôle magnétique feuilletée. En variante, cette pièce magnétique centrale est réalisée en matière magnétique non feuilletée.

Ici, des aimants sont logés dans les espaces d'isolation ou le jeu central des rotors 4, 100 et 110. Toutefois, ces aimants sont tous facultatifs. Ainsi, en variante, un rotor ne comporte aucun aimant supplémentaire.

Dans une variante visant à simplifier le montage d'un rotor tel que décrit aux figures 1 à 3, chaque élément 44 formant un premier plot magnétique est remplacé par une seule et même pièce magnétique, par exemple en tôle magnétique feuilletée. Les cales magnétiques 76, 78 appliquées à chaque extrémité de la pièce magnétique centrale 48 sont alors venues de matière avec cette dernière. Ainsi, dans cette variante, les cales indépendantes 76, 78 sont supprimées.

De façon similaire, dans une variante visant à simplifier le montage d'un rotor tel que décrit à la figure 4, l'élément magnétique 44 est remplacé par une seule et même pièce magnétique d'un seul tenant, par exemple en tôle magnétique feuilletée, au lieu d'une cale magnétique et d'une pièce magnétique centrale 48. Cette variante permet également de supprimer les cales magnétiques 76 et 78. Avantageusement, dans cette variante, les éléments magnétiques formant les premiers et seconds plots magnétiques sont identiques les uns aux autres et seule la façon dont ils sont assemblés avec les flasques d'extrémité 30, 32 définit leur polarité.

## Revendications

1. Rotor (4 ; 100 ; 110) pour machine électrique tournante à double excitation comportant :
- des premier et second flasques annulaires (30, 32) en matériau magnétique, disposés coaxialement suivant l'axe du rotor (4 ; 100 ; 110), et
- entre lesdits premier et second flasques (30, 32), un ensemble de plots magnétiques successifs répartis à la surface périphérique du rotor (4 ; 100 ; 110) et agencés pour définir des premiers plots magnétiques (48, 76, 78 ; 48, 76) et des seconds plots magnétiques (48 ; 48, 78) de polarités opposées, les premiers et seconds plots magnétiques étant disposés alternativement suivant la périphérie du rotor (4 ; 100 ; 110),
**caractérisé en ce que** chaque plot magnétique est formé d'un élément indépendant (44) et **en ce que** le rotor comporte des moyens (46) de fixation desdits éléments (44) autour de l'axe du rotor (4 ; 100 ; 110).

2. Rotor (4 ; 100 ; 110) selon la revendication 1, **caractérisé en ce que** chaque élément (44) formant les premiers plots magnétiques (48, 76, 78 ; 48, 76) comporte une première extrémité (76) appliquée directement contre le premier flasque annulaire (30) pour établir un circuit magnétique entre le premier flasque annulaire (30) et chacun des premiers plots magnétiques (48, 76, 78 ; 48, 76), et **en ce que** chaque élément (44) formant les seconds plots magnétiques (48 ; 48, 78) comporte une première extrémité (50) tournée vers le premier flasque (30) et séparée du premier flasque annulaire (30) par un espace latéral d'isolation pour inhiber l'établissement d'un circuit magnétique entre ce premier flasque annulaire (30) et chacun des seconds plots magnétiques (48 ; 48, 78).

3. Rotor (4 ; 110) pour machine tournante à double excitation homopolaire selon la revendication 2, **caractérisé en ce que** chaque élément (44) formant les premiers plots magnétiques (48, 76, 78) comporte une seconde extrémité (78) appliquée directement contre le second flasque annulaire (32) pour établir un circuit magnétique entre le second flasque annulaire (32) et chacun des premiers plots magnétiques (48, 76, 78), et **en ce que** chaque élément (44) formant les seconds plots magnétiques (48) comporte une seconde extrémité (52) tournée vers le second flasque annulaire (32) et séparée du second flasque annulaire par un espace latéral d'isolation pour inhiber l'établissement d'un circuit magnétique entre ce second flasque annulaire (32) et chacun des seconds plots magnétiques (48).

4. Rotor (100, 110) pour machine tournante à double excitation bipolaire selon la revendication 2, **caractérisé en ce que** chaque élément (44) formant les premiers plots magnétiques (48, 76) comporte une seconde extrémité (52) tournée vers le second flasque annulaire (32) et séparée du second flasque annulaire (32) par un espace latéral d'isolation pour inhiber l'établissement d'un circuit magnétique entre ce second flasque annulaire (32) et chacun des premiers plots magnétiques (48, 76), et **en ce que** chaque élément formant les seconds plots magnétiques (48, 78) comporte une seconde extrémité (78) appliquée directement contre le second flasque annulaire (32) pour établir un circuit magnétique entre le second flasque annulaire et chacun des seconds plots magnétiques (48, 78).

5. Rotor (4 ; 100 ; 110) selon l'une quelconque des revendications 2 à 4, **caractérisé en ce que** l'extrémité de chaque élément indépendant (44), appliquée directement contre le premier ou le second flasque annulaire (30, 32), est constituée d'une cale magnétique détachable (76), tandis que la partie comprise entre la première et la seconde extrémités de chaque élément indépendant (44) est constituée d'une pièce magnétique centrale d'un seul tenant (48).

6. Rotor (4 ; 100 ; 110) selon la revendication 5, **caractérisé en ce que** les pièces magnétiques centrales (48) sont réalisées en tôle magnétique feuilletée.

7. Rotor (4 ; 100 ; 110) selon la revendication 5 ou 6, **caractérisé en ce que** les pièces magnétiques centrales (48) sont identiques les unes aux autres.

8. Rotor (4 ; 100 ; 110) selon l'une quelconque des revendications 2 à 7, **caractérisé en ce que** des aimants (80, 82) sont logés dans les espaces latéraux d'isolation situés entre les extrémités des éléments indépendants (44) et le ou chaque flasque annulaire (30, 32).

9. Rotor (4 ; 100 ; 110) selon l'une quelconque des revendications précédentes, **caractérisé en ce que** les éléments indépendants (44) sont séparés latéralement les uns des autres par des espaces d'isolation pour inhiber l'établissement de circuits magnétiques entre deux éléments indépendants successifs.

10. Rotor (4 ; 100 ; 110) selon la revendication 9, **caractérisé en ce que** des aimants (66, 68) sont logés dans les espaces d'isolation séparant latéralement les éléments indépendants (44).

11. Rotor (110) selon l'une quelconque des revendications précédentes, **caractérisé en ce qu'**il comporte, entre les deux flasques annulaires, une couronne magnétique (112) disposée coaxialement avec l'axe du rotor (110), les éléments indépendants (44) étant régulièrement répartis autour de la périphérie externe de cette couronne et séparés de celle-ci par un espace axial dans lequel est logé au moins un aimant supplémentaire (114).

12. Rotor (4 ; 100 ; 110) selon l'une quelconque des revendications précédentes, **caractérisé en ce que** la section transversale des éléments indépendants (44) formant les plots magnétiques est constante.

13. Rotor (4 ; 100 ; 110) selon l'une quelconque des revendications précédentes, **caractérisé en ce que** les moyens de fixation (46) comportent des vis amagnétiques.

14. Rotor (4 ; 100 ; 110) selon l'une quelconque des revendications précédentes, **caractérisé en ce qu'**il comporte un nombre pair d'éléments indépendants (44).

15. Machine électrique tournante à double excitation contenant un stator (2) et un rotor (4 ; 100 ; 110), **caractérisée en ce que** le rotor (4 ; 100 ; 110) est conforme à l'une quelconque des revendications précédentes, et **en ce que** les premier et second flasques annulaires (30, 32) du rotor (4 ; 100 ; 110) comportent chacun une portion (36, 38) définissant avec le stator (2) un entrefer de retour de flux magnétique.

16. Machine électrique tournante à double excitation homopolaire selon la revendication 15, **caractérisée en ce que** le rotor (4 ; 110) est conforme à la revendication 3.

17. Machine électrique tournante à double excitation bipolaire selon la revendication 15, **caractérisée en ce que** le rotor (100 ; 110) est conforme à la revendication 4.

18. Machine électrique tournante selon l'une quelconque des revendications 15 à 17, **caractérisée en ce que** le stator (2) comporte :
- un noyau magnétique annulaire (10),
- au moins un bobinage d'excitation (12, 14),
- un bobinage statorique (16) bobiné sur le noyau magnétique annulaire (10),
- au moins une couronne magnétique (20) en contact avec la surface extérieure du noyau magnétique annulaire (10), ladite au moins une couronne magnétique (20) comprenant, à chaque extrémité, un rebord d'extrémité radial (21, 22) définissant, avec les portions (36, 38) des flasques annulaires (30, 32) du rotor (4 ; 100 ; 110) l'entrefer de retour de flux.
